# EUROPÄISCHE PATENTSCHRIFT

(11) **EP 1 320 950 B1**
(45) Veröffentlichungstag und Bekanntmachung des Hinweises auf die Patenterteilung: **23.11.2005**
(21) Anmeldenummer: 01982114.9
(22) Anmeldetag: 17.09.2001
(51) Int. Cl.: H04B 10/17

(54) **RAMAN-VERSTÄRKER**
RAMAN AMPLIFIER
AMPLIFICATEUR RAMAN

(30) Priorität: 29.09.2000 DE 10048460
(43) Veröffentlichungstag der Anmeldung: 25.06.2003
(73) Patentinhaber: SIEMENS AKTIENGESELLSCHAFT, 80333 München (DE)
(72) Erfinder: KRUMMRICH, Peter, 81379 München (DE)
(86) Internationale Anmeldenummer: PCT/DE2001/003569
(87) Internationale Veröffentlichungsnummer: WO 2002/027981

(56) Entgegenhaltungen:
- EP-A- 0 139 081
- DE-A- 19 910 041
- US-A- 6 097 535
- US-A- 6 115 174
- MASSICOTT J F ET AL: "LOW NOISE OPERATION OF ER3+ DOPED SILICA FIBRE AMPLIFIER AROUND 1.6 UM" ELECTRONICS LETTERS, IEE STEVENAGE, GB, Bd. 28, Nr. 20, 24. September 1992 (1992-09-24), Seiten 1924-1925, XP000315929 ISSN: 0013-5194 in der Anmeldung erwähnt

## Beschreibung

Die Erfindung betrifft einen Raman-Verstärker nach dem Oberbegriff des Patentsanspruchs 1.

Es ist bekannt, daß ein optisches Signal bei der Übertragung durch eine optische Faser gedämpft wird. Deshalb müssen die optischen Signale verstärkt werden. Für die optische Übertragung von Signalen sind zwei physikalische Kriterien, erstens die Verstärkung und zweitens das optische Signal-zu-RauschVerhältnis OSNR wesentlich. Bei WDM-Systemen (Wellenlängenmultiplex) müssen über einen großen Frequenzbereich diese zwei Kriterien für alle WDM-Signale ausreichend und konstant sein. Im idealen Fall werden die Verläufe der Signalpegel und der Signal-Rausch-Abstände eben sein. Die Anwendung der verteilten Raman-Verstärkung in der Übertragungsfaser erlaubt eine deutliche Verbesserung der Eigenschaften optischer Übertragungssysteme. Alle WDM-Kanäle (Einzelsignale) am Ende der Faser sollten zumindest annähernd gleiche Amplituden aufweisen. Wenn die Gewinnspektren nicht flach verliefen, dann würde der Dynamikbereich des Empfängers überschritten oder nicht komplett genutzt werden.

Das Ziel der Optimierung besteht üblicherweise darin, ein möglichst flaches Gewinnspektrum bzw. gleiche Ausgangspegel der einzelnen Kanäle am Ende des Ubertragungsfaserabschnittes einzustellen. Ein sehr flaches Gewinnspektrum über einem breiten Wellenlängenbereich läßt sich nur durch den Einsatz vieler Pumpwellenlängen erzielen. Bisher bekannte verteilte Raman-Verstärker für WDM-Übertragungssysteme arbeiten beispielsweise mit mehreren Pumplasern, deren Ausgangssignale jeweils eine andere Wellenlänge aufweisen.

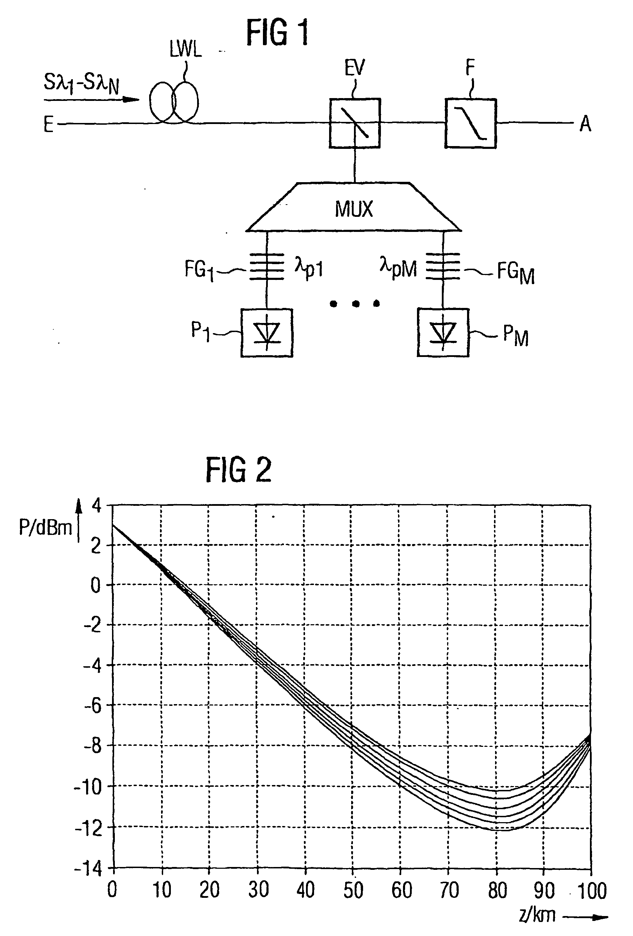

Aus" Low noise operation of Er³⁺ doped silica fibre amplifier around 1.6 µm", J.F. Massicott, R. Wyatt, B.J. Ainslie, E-lectronics Letters, Vol.28, No.20, 24^{th} Sept. 1992 ist ein Verstärker für eine Signalbandbreite von 40 nm zwischen 1,57 und 1,61 µm dargestellt. Hier werden Pumpsignale von zwei Pumplasern in die Faser eingespeist. Die Wellenlänge des zu übertragenden Signals beträgt 1,6 µm Mikrometer und die Wellenlänge des ersten Pumplasers 1,48 µm. Die größere Wellenlänge 1,55µm und die Leistung des zweiten Pumplasers werden so ausgewählt, daß bei einer Besetzungsinversion von 35% des Verstärkers am Eingang des WDM-Signals die über eine Bandbreite von 40 nm verteilten WDM-Kanäle so konstant wie möglich verstärkt werden. In dieser Literaturstelle werden verschiedene Leistungen der Pumpquelle ausprobiert, um Verstärkung und OSNR zu optimieren. Entsprechend Figur 2 der Literaturstelle sind die Verläufe der Verstärkung und der Rauschleistung über eine Bandbreite von ca. 40 nm für eine gewählte Pumpleistung von 87mW bei 1,55µm und eine zusätzliche Pumpleistung von -17.dBm bei 1,48µm optimiert. Die Schwankungen der Rauschleistung betragen ca. 1dB bei einem Gewinn von 24 dB. Größere Gewinne bis 31dB können erreicht werden, wenn größere Gewinn-Unterschiede zwischen den WDM-Kanälen von ca. 10 dB zugelassen sind.

In der Patentanmeldung EP 0139081 A2 wird ein Raman-Verstärker beschrieben. Er weist mehrere hintereinander angeordnete Raman-Verstärkerstufen (RA1, RA2...) mit jeweils mehreren Pumpquellen auf, deren Wellenlängen nahe beieinander liegen. Dadurch wird das Maximum des Raman-Gewinnspektrums flacher, und die WDM-Kanäle am Ausgang des Verstärkers weisen ähnliche Pegel auf (Seite 13, Zeile 9-11).

Aus EP 1 018 666 A1 ist ein Raman-Verstärker mit mehreren Pumpquellen bekannt, deren Pumpsignale unterschiedliche Wellenlängen aufweisen und deren Wellenlängenabstände zwischen 6 und 35 nm zur Einebnung des Pegelverlaufs eines WDM-Signals liegen, so dass eine Filterung der Pegel mittels eines "gain flattening filter" nicht notwendig ist.

Aus DE 199 10 041 A1 ist ein optischer Verstärker bekannt, bei dem ein Kompensations-Pumpsignal in eine dispersionskompensierende Faser eingespeist ist, dessen Amplitude und Frequenz so gewählt sind, dass eine gewünschte Verkippung der Pegel eines zu verstärkenden breitbandigen Signals erzielt wird.

Aus US 6 115 174 ist ein optisches Übertragungssystem mit einer Pumpquelle bekannt, deren Pumpsignale unterschiedliche Wellenlängen aufweisen. Die Wellenlängen bzw. die Leistung der Pumpsignale sind derart gewählt und variiert, dass eine Änderung des Pegelverlaufs eines verstärkten breitbandigen Signals eingestellt bzw. variiert wird.

In US 6 097 535 sind eine Methode und eine Anordnung zur optischen Verstärkung eines WDM-Signals mit mehreren Kanälen beschrieben, bei denen wellenlängen-abhängige Abweichungen der Pegel und der Signal-Rauschabstände der Kanalsignale minimiert werden. Zur Einebnung der Spektrums der Signal-Rauschabstände ist ein erstes optisches Filter zwischen zwei kaskadierten Verstärkern angeordnet. Zur Einebnung des Spektrums der Pegel ist ein zweites optisches Filter den Verstärkern nachgeschaltet. Die Verwendung von zwei optischen Filtern ist hier aufwendig.

Die Aufgabe der vorliegenden Erfindung besteht also darin, einen Verstärker mit optimalen Verläufen des Signal-Rauschabstandes anzugeben. Außerdem sollte die Verstärkung für alle WDM-Kanäle möglichst gleich sein.

Erfindungsgemäß wird diese Aufgabe durch einen Raman-Verstärker gelöst, der durch die Merkmale des Anspruchs 1 gekennzeichnet ist.

Zweckmäßige Weiterbildungen werden in den abhängigen Ansprüchen beschrieben.

Es wird ein Raman-Verstärker mit mehreren Pumplasern angegeben, deren Pumpwellenlängen und Leistungen so gewählt sind, daß der Verlauf des OSNRs optimiert ist.
Ist eine die Frequenz eines WDM-Kanals um den Stokes-Shift (maximale Verstärkung bei 13,2THz-Shift) zur Frequenz einer Pumpquelle verschoben, so wird dieser Kanal optimal verstärkt (siehe "Fiber-Optic Communication Systems", 2. Edition, Govind P. Agrawal, Seite 381, Figur 8.11). Da in der Praxis aus Kostengründen die Anzahl M der Pumpquellen kleiner als die Anzahl der WDM-Kanäle ist, werden die Kanäle unterschiedlich verstärkt. Dadurch sind die Verläufe der Pegel und der Rauschabstände über die Bandbreite des WDM-Signals zunächst nicht ideal. Durch eine geeignete Wahl der Wellenlängen und der Leistungen einer geringen Anzahl von Pumpquellen kann der Rauschabstand für die gesamte Bandbreite des WDM-Signals optimiert werden.

Für den erfindungsgemäßen verteilten Raman-Verstärker wird die Verteilung der Pumpstrahlungsanteile bei den einzelnen Pumpwellenlängen so gewählt, daß nicht gleiche Pegel, sondern gleiche Signal-Rauschabstände der einzelnen Kanäle am Ausgang des Überträgungsfaserabschnittes erreicht werden.

Durch den Einsatz dieser Technik wird der minimale Rauschabstand am Streckenende oder die Länge der zu überbrückenden Strecke vergrößert. Das Gewinnspektrum des Raman-Verstärkers sollte außerdem flach verlaufen, damit der Dynamikbereich des Empfängers nicht eingeschränkt oder gar überschreiten wird. Entscheidend für die Verbesserung der Systemeigenschaften sind jedoch der Rauschabstand und der minimale Kanalpegel, die im jeweiligen Übertragungsfaserabschnitt auftreten. Damit alle Kanäle im gleichen Maße von der verteilten Raman-Verstärkung profitieren, müssen die Rauschzahlen bzw. die minimalen Pegel aller Kanäle an einer Stelle der Übertragungsfaser, bei der die Raman-Verstärkung einsetzt, möglichst gut übereinstimmen. Andernfalls wird die erzielbare Systemoptimierung durch den Kanal mit dem geringsten Pegel bzw. dem schlechtesten Rauschverhalten begrenzt. Der Verlauf des Gewinnspektrums bzw. die Pegelverteilung der Kanäle am Ausgang des Übertragungsfaserabschnittes läßt sich durch ein Filter einebnen.

Daher weisen dann die Kanäle am Ausgang des Filters sowohl gleiche Signalqualität als auch gleiche Pegel auf. Dieses Ergebnis gilt unter der Voraussetzung, daß die Signale am Eingang der Übertragungsfaser ebenfalls gleiche Pegel und gleiche Signal-Rauschabstände aufweisen.

Idealerweise verfügen die Zwischenverstärker des Übertragungssystems, die typischer Weise aus Erbium dotierten Faserverstärktern (EDFAs) bestehen, über ein flaches Pegel-Gewinnspektrum. Weisen die EDFAs hingegen zwar ein flaches Pegel-Gewinnspektrum auf, jedoch kein flaches Rauschzahlsprektrum, dann läßt sich die Verteilung der Signal-Rauschabstände der Kanäle am Ausgang des verteilten Raman-Verstärkers auch für diesen Betriebsfall optimieren. Zu diesem Zweck muß die Verteilung der Leistungen der Pumpsignale des Raman-Verstärkers derart angepaßt werden, daß Kanäle am Ausgang des Raman-Verstärkers gleiche Signal-Rauschabstände aufweisen. Kanäle mit höheren Signal-Rauschabstände, die durch die Faserverstärker nicht verschlechtert werden, können bei der Raman-Verstärkung vernachlässigt werden, und Kanäle mit niedrigem Rauschabstand bzw. Kanäle, bei denen der EDFA einen geringen Rauschabstand aufweist, müssen bei der Raman-Verstärkung besonders berücksichtigt werden. Da der EDFA ein flaches Gewinnspektrum aufweist, werden die Pegel der Kanäle auf Kosten ihrer jetzt gleichen Signal-Rauschabstände unterschiedlich sein. Die Pegel der Kanäle dürfen am Ausgang des Raman-Verstärkers aber nicht wesentlich voneinander abweichen. Dies läßt sich wieder mit Hilfe eines speziell für diesen Betriebsfall optimierten Filter erreichen.

Ein Ausführungsbeispiel der Erfindung wird anhand von Figuren näher beschrieben, dabei zeigen:
Figur 1: Einen erfindungsgemäßen Verstärker,
Figur 2: Pegelverläufe der Kanäle entlang der Übertragungsfaser, wenn die bei Pumplaserleistungen so verteilt sind, daß eines flachen Pegelspektrum am Ende der Faser erreicht wird,
Figur 3: Pegelverläufe der Kanäle entlang der Übertragungsfaser bei einer Verteilung der Pumplaserleistungen zur Erzielung eines flachen Spektrum der Signal-Rauschabstände am Ende der Faser,
Figur 4: Einen Vergleich der Signal-Rauschabstände der Kanäle am Ausgang des Raman-Verstärkers bei flachem Gewinnspektrum und bei optimiertem Signal-Rausch-Abstand.

In Figur 1 ist eine Anordnung des neuen Verstärkers abgebildet. Am Eingang E des verteilten Raman-Verstärkers wird einer Faser LWL ein WDM-Signal zugeführt. Angenommen wird, daß das WDM-Signal N Kanälen mit entsprechenden Wellenlängen λ₁ bis zum λ_{N} enthält. Die Ausgangssignale von M Pumpquellen (Laser) P₁ bis P_{M} werden über einen Wellenlängenmultiplexer (Frequenzweiche) MUX und eine Einkopplungseintichtung EV in die Übertragungsfaser LWL kontradirektional zur Ausbreitungsrichtung des WDM-Signals eingespeist. Die Wellenlängen λ_{P1} bis λ_{PM} der Ausgangssignale werden mit Hilfe von Fasergittern FG₁ bis FG_{M} stabilisiert. Dem Ausgang A des neuen Raman-Verstärkers ist ein Filter F vorgeschaltet, das einen Pegelabgleich aller Kanäle bewirkt, damit der Pegelverlauf der Kanäle am Ausgang A flach wird.

Figur 2 stellt die Pegelverläufe der einzelnen Kanäle entlang der Übertragungsfaser für die Auslegung des Raman-Verstärkers zur Erzielung gleicher Ausgangspegel dar. Die Wellenlängen der sechs Pumplaserdioden werden mit Hilfe der Fasergitter FG₁ bis FG₆ in der Ausgangsfaser auf folgende Mittelwellenlängen stabilisiert: 1409 nm, 1424 nm, 1438 nm, 1453 nm, 1467 nm, 1482 nm. Für dieses Beispiel wurden die Ausgangsleistungen der einzelnen Pumplaser so eingestellt, daß alle Kanäle vom Ausgang der Faser auch mit Raman-Verstärkung annähernd gleiche Pegel aufweisen. Dies läßt sich beispielsweise mit den jeweiligen Pumpleistungen: 23 dBm, 23 dBm, 19 dBm, 18 dBm, 18 dBm, 18 dBm erzielen. Am Eingang der Faser werden 40 Kanäle im Wellenlängenbereich von 1530,33 nm bis 1561,42 nm mit 100 GHz Kanalabstand und einem Pegel von +3 dBm pro Kanal eingespeist. Der Übertragungsfaserabschnitt hat eine Länge von 100 km und eine Dämpfungskonstante von 0,22 dB/km; die entspricht einer Gesamtdämpfung von 22 dB. Bei ausgeschalteten Raman-Pumplasern kommen die Kanäle am hinteren Ende der Faser mit Ausgangspegeln von -19 dBm pro Kanal an. Auffallend in Figur 2 sind die stark unterschiedlichen minimalen Pegel der Kanäle, die durch unterschiedliche Dämpfung in der Ubertragungsfaser auftreten.

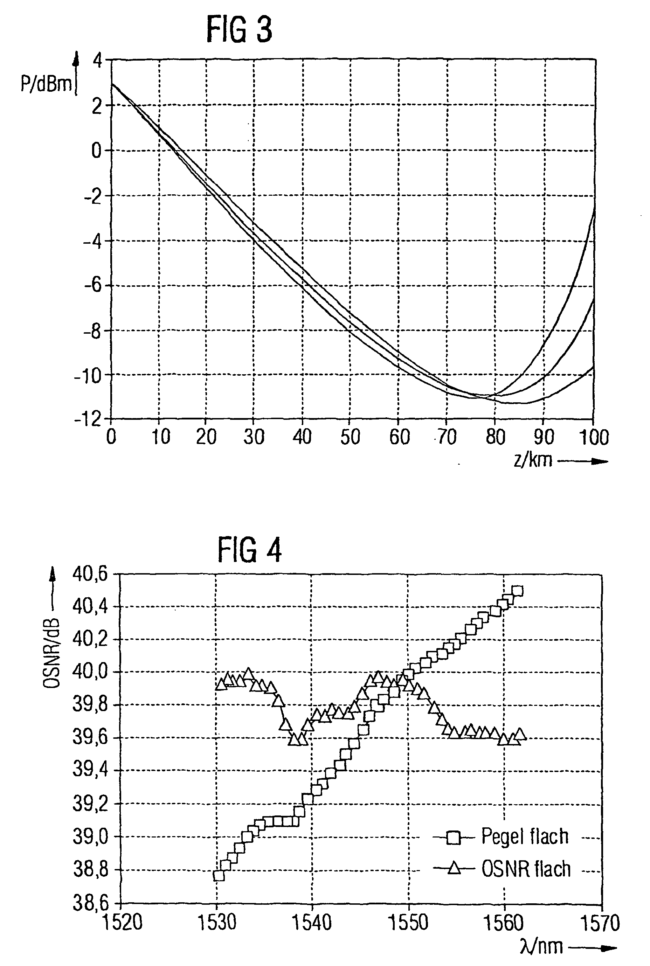

In Figur 3 zeigt Pegelverläufe der Kanäle entlang der Faser bei einem erfindungsgemäß dimensionierten Verstärker auf. Die Leistungen der 6 Pumplaser sind nun mit 0 dBm, 26 dBm, 22 dBm, 18 dBm, 16 dBm, 10 dBm gewählt. Die Summe der Pumpleistungen bleibt dabei konstant bei 28,3 dBm. Im Vergleich zu Figur 1 weichen die minimalen Pegel der Kanäle in der Faser deutlich weniger aber die Pegel am Ende der Übertragungsfaser gegenüber Figur 2 stärker voneinander ab.

Figur 4 erlaubt einen Vergleich der optischen Signal-Rauschabstände am Ausgang des bekannten und des erfindungsgemäßen Raman-Verstärkers. Für den Verstärker nach dem Stand der Technik mit flachen Pegelspektrum steigt der OSNR-Verlauf zur längeren Wellenlänge hin spürbar an. Der erfindungsgemäße Verstärker erreicht hingehen einen flachereren OSNR-Verlauf der Kanäle. Der kleinste OSNR-Wert des erfindungsgemäßen Verstärkers liegt bei 39,6 dB, während einige Kanäle des bekannten Verstärkers deutlich kleinere OSNR-Werte bis hinunter 38,8 dB aufweisen. Damit erzielt der erfindungsgemäße Verstärker mit der gleichen Summenpumpleistung ein deutlich besseres Systemverhalten. Die kleinen Schwankungen des OSNR-Verlaufs des erfindungsgemäßen Verstärkers ließen sich noch durch eine weitere Optimierung der Ausgangswellenlängen der Pumplaser oder durch die Verwendung von zusätzlichen Pumplasern reduzieren.

## Patentansprüche

1. Raman-Verstärker mit mehreren jeweils einer Wellenlänge (λ_{P1},...,λ_{PM}) zugeordneten Pumpquellen (P₁,...,P_{M}) für ein mehrere optische Kanäle (Sλ₁,...,Sλ_{N}) mit unterschiedlichen Wellenlängen (λ₁,...,λ_{N}) enthaltendes über eine optische Faser (LWL) übertragenes WDM-Signal (Sλ₁ - Sλ_{N}),
**dadurch gekennzeichnet,**
**daß** Wellenlängen (λ_{P1},...,λ_{PM}) und Leistungen der Pumpquellen (P₁, P_{M}) so gewählt sind, daß alle optische Kanäle (Sλ₁,...,Sλ_{N}) des WDM-Signals gleiche OSNR-Abstände am Ende der Übertragungsfaser (LWL) aufweisen.

2. Raman-Verstärker nach Anspruch 1,
**dadurch gekennzeichnet,**
**daß** eine Einkoppeleinrichtung (EV) für die Pumpsignale am Ende des Übertragungsfaserabschnittes (LWL) angeordnet ist, über die die Pumpsignale kontradirektional zum WDM-Signal in die bertragungsfaser (LWL) einspeist werden.

3. Raman-Verstärker nach Anspruch 1 oder 2,
**dadurch gekennzeichnet,**
**daß** ein Wellenlängenmultiplexer (MUX) zur Zusammenfassung der Pumpsignale (P₁,...,P_{M}) vor der Einspeisung in die Übertragungsfaser (LWL) vorgesehen ist.

4. Raman-Verstärker nach einem der vorhergehenden Ansprüche,
**dadurch gekennzeichnet,**
**daß** als Pumpquellen (P₁,...,P_{M}) Laserdioden vorgesehen sind.

5. Raman-Verstärker nach einem der vorhergehenden Ansprüche,
**dadurch gekennzeichnet,**
**daß** Fasergitter (FG₁,...,FG_{M}) als optische Filter jeder Pumpquelle (P₁,...,P_{M}) nachgeschaltet sind, so daß die Pumpsignale schmale stabilisierte Wellenlängebereiche aufweisen.

6. Raman-Verstärker nach einem der vorhergehenden Ansprüche,
**dadurch gekennzeichnet,**
**daß** die Leistungen der Pumpquellen (P₁,...,P_{M}) für die Verstärkung aller Kanäle eines NDM-Signals einzeln einstellbar sind.

7. Raman-Verstärker nach einem der vorhergehenden Ansprüche,
**dadurch gekennzeichnet,**
**daß** ein Filter (F) zur Erzielung eines flachen Pegelverlaufs des verstärkten WDM-Signals am Ausgang des Raman-Verstärkers vorgesehen ist.

8. Raman-Verstärker nach einem der vorhergehenden Ansprüche,
**dadurch gekennzeichnet,**
**daß** er eine Abweichung des OSNR-Gewinnspektrum von weniger als 0,5 dB für eine WDM-Bandbreite von 80 nm im Wellenlängenfenster von 1,5 µm nach einer Übertragungsstrecke von 100 km aufweist.

9. Raman-Verstärker nach einem der vorhergehenden Ansprüche,
**dadurch gekennzeichnet,**
**daß** die Pumpsignale mit den Wellenlängen 1409 nm, 1424 nm, 1438 nm, 1453 nm, 1467 nm, 1482 nm und den verteilten Leistungen 0 dBm, 26 dBm, 22 dBm, 18 dBm, 16 dBm, 10 dBm vorgesehen sind.

## Claims

1. Raman amplifier with a number of pump sources each assigned to a wavelength (λ₁,...,λ_{N}) for a WDM signal (Sλ₁ - Sλ_{N}) containing a plurality of optical channels (Sλ₁,..., Sλ_{N}) with different wavelengths (λ₁,...,λ_{N}) transmitted via an optical fibre (LWL),
**characterized in that**,
the wavelengths (λ_{P1},...,λ_{PM}) and output powers of the pump sources (P₁,...,P_{M}) are selected such that all the optical channels (Sλ₁,..., Sλ_{N}) of the WDM signal exhibit equal optical S/N ratios at the end of the transmission fibre (LWL) .

2. Raman amplifier according to Claim 1,
**characterized in that**
at the end of the transmission fibre section (LWL) there is disposed a pump signal launching device (EV) via which the pump signals are injected into the transmission fibre (LWL) contradirectionally to the WDM signal.

3. Raman amplifier according to Claim 1 or 2,
**characterized in that**
there is provided a wavelength multiplexer (MUX) for combining the pump signals from (P₁,...,P_{M}) prior to injection into the transmission fibre (LWL).

4. Raman amplifier according to one of the preceding claims,
**characterized in that**
laser diodes are provided as pump sources (P₁,...,P_{M}).

5. Raman amplifier according to one of the preceding claims,
**characterized in that**
fibre lattices (FG₁,...,FG_{M}) are connected as optical filters at the output of each pump source (P₁,...,P_{M}) so that the pump signals exhibit narrow stabilized wavelength ranges.

6. Raman amplifier according to one of the preceding claims,
**characterized in that**
the output powers of the pump sources (P₁,...,P_{M}) can be individually adjusted for amplifying all the channels of a WDM signal.

7. Raman amplifier according to one of the preceding claims,
**characterized in that**
there is provided a filter (F) for achieving a flat level response of the amplified WDM signal at the Raman amplifier output.

8. Raman amplifier according to one of the preceding claims,
**characterized in that**
it exhibits a variation of less than 0.5 dB in the OSNR gain spectrum for a WDM bandwidth of 80 nm in the 1.5 µm wavelength window after a transmission route of 100 km.

9. Raman amplifier according to one of the preceding claims,
**characterized in that**
the pump signals are provided with the wavelengths 1409 nm, 1424 nm, 1438 nm, 1453 nm, 1467 nm, 1482 nm and the distributed output powers 0 dBm, 26 dBm, 22 dBm, 18 dBm, 16 dBm, 10 dBm.

## Revendications

1. Amplificateur Raman comprenant plusieurs sources de pompage (P₁, ..., P_{M}) respectivement affectées à une longueur d'onde (λ_{P1}, ..., λ_{PM}) pour un signal WDM (Sλ₁ - Sλ_{N}) contenant plusieurs canaux optiques (Sλ₁, ..., Sλ_{N}) ayant différentes longueurs d'onde (λ₁, ..., λ_{N}), transmis par l'intermédiaire d'une fibre optique (LWL),
**caractérisé en ce**
**que** les longueurs d'onde (λ_{P1}, ..., λ_{PM}) et les puissances des sources de pompage (P₁, ..., P_{M}) sont sélectionnées de telle manière que tous les canaux optiques (Sλ₁, ..., Sλ_{N}) du signal WDM présentent des écarts OSNR à l'extrémité de la fibre de transmission (LWL).

2. Amplificateur Raman selon la revendication 1,
**caractérisé en ce**
**qu'**un dispositif de couplage (EV) pour les signaux de pompage est placé à l'extrémité de la section de la fibre de transmission (LWL), au moyen duquel les signaux de pompage sont alimentés dans la fibre de transmission (LWL) de manière contradirectionnelle par rapport au signal WDM.

3. Amplificateur Raman selon la revendication 1 ou 2,
**caractérisé en ce**
**qu'**un multiplexeur de longueur d'onde (MUX) est prévu pour regrouper les signaux de pompage (P₁, ..., P_{M}) avant l'alimentation dans la fibre de transmission (LWL).

4. Amplificateur Raman selon l'une quelconque des revendications précédentes,
**caractérisé en ce**
**que** des diodes laser sont prévues comme sources de pompage (P₁, ..., P_{M}) .

5. Amplificateur Raman selon l'une quelconque des revendications précédentes,
**caractérisé en ce**
**que** des grilles de fibre (FG₁, ..., FG_{M}) sont installées en aval de chaque source de pompage (P₁, ..., P_{M}) comme filtres optiques, de sorte que les signaux de pompage présentent des gammes d'ondes étroites et stabilisées.

6. Amplificateur Raman selon l'une quelconque des revendications précédentes,
**caractérisé en ce**
**que** les puissances des sources de pompage (P₁, ..., P_{M}) sont réglables individuellement pour l'amplification de tous les canaux d'un signal WDM.

7. Amplificateur Raman selon l'une quelconque des revendications précédentes,
**caractérisé en ce**
**qu'**un filtre (F) est prévu pour obtenir une allure de niveaux plate du signal WDM amplifié sur la sortie de l'amplificateur Raman.

8. Amplificateur Raman selon l'une quelconque des revendications précédentes,
**caractérisé en ce**
**qu'**il présente un écart de moins de 0,5 dB par rapport au spectre de gain OSNR pour une largeur de bande WDM de 80 nm dans la fenêtre de longueur d'onde de 1,5 µm après un trajet de transmission de 100 km.

9. Amplificateur Raman selon l'une quelconque des revendications précédentes,
**caractérisé en ce**
**que** les signaux de pompage sont prévus avec les longueurs d'onde 1409 nm, 1424 nm, 1438 nm, 1453 nm, 1467 nm, 1482 nm et les puissances réparties 0 dBm, 26 dBm, 22 dBm, 18 dBm, 1dBm, 10 dBm.
